# EUROPEAN PATENT SPECIFICATION

(11) **EP 1 964 226 B1**
(45) Date of publication and mention of the grant of the patent: **17.03.2010**
(21) Application number: 05849572.2
(22) Date of filing: 23.12.2005
(51) Int. Cl.: H02G 3/14, H02G 3/08

(54) **CONNECTION DEVICE FOR JUNCTION DEVICES**
VERBINDUNGSEINRICHTUNG FÜR ANSCHLUSSEINRICHTUNGEN
DISPOSITIF DE CONNEXION POUR DISPOSITIFS DE JONCTION

(43) Date of publication of application: 03.09.2008
(73) Proprietor: Bocchiotti S.p.A. Societa' per l'Industria Elettrotecnica, I-20124 Milano (IT)
(72) Inventor: NARDI, Ivo, I-16016 Cogoleto, Genova (IT)
(74) Representative: Long, Giorgio
(86) International application number: PCT/IT2005/000761
(87) International publication number: WO 2007/072519

(56) References cited:
- FR-A- 2 694 038
- US-A- 5 186 661

## Description

. Object of the present invention is a connection device for a junction box for electrical installations, particularly a device for connecting a box and a cover of a junction box for civil and industrial electrical installations.

. In the field of civil and industrial electrical installations, the use is known and appreciated of junction boxes adapted to house inserts, branches and small instruments necessary for the correct configuration of the electrical installation.

. Such junction box usually comprises a box intended to be installed during the setting of the installation and a cover intended to close the box during the operative life of the installation. Usually the cover is removable, thus to permit an operator to intervene on the relevant installation portion of the junction box.

. The junction boxes are commonly offered on the market in two different types, according to the resistance to water penetration which is required for the specific use.

. A first type has circular openings intended to permit the passage of cables or tubes which house the cables. The circular openings, created at the time of production of the box, are generally closed by concentric circle bellows cable-passing membranes. The membranes permit easily making circular holes of diameter adapted to receive the cables and/or tubes.

. The second type has, on the other hand, continuous walls, on which the installer may make the openings strictly necessary for the specific needs, maintaining integral the other portions of the box. Such openings are then equipped with appropriate cable gland sleeves which guarantee a high resistance to the penetration of water. This second solution permits, overall, maintaining a greater resistance to the penetration of water.

. At every possible inspection, maintenance or modification intervention of the installation, the operator has the possibility of opening each box, removing the cover, working on the installation and finally closing the box again by repositioning the respective cover.

. Often, during the inspection or maintenance step of the installation, a multiplicity of boxes is opened, and the operator faces the problem of the temporary placement of the removed covers.

. Several solutions for this problem have been proposed.

. In accordance with a first known solution, the fixing screws of the box cover are equipped with a spherical head, so that they may act as hinges once loosened.

. In accordance with a second known solution, together with the box, hinges are provided adapted to be engaged in appropriate guides provided on the box and cover.

. These.solutions permit operating inside the box and at the same time maintaining the cover in place, thus avoiding that it is dispersed or mistaken for other covers of similar boxes.

. The solutions described above do not however lack drawbacks.

. The solution based on the spherical head screws imposes the hinge between box and cover without considering the actual need. Therefore the installer is obliged to make use of such hinge even if the specific needs do not require it.

. Such drawback was partially resolved through the second solution, which permits to install the hinges exclusively in view of the real needs of the installer.

. Such solution however has the disadvantage of requiring the use of tools for the mounting of the optional hinges.

. Both solutions moreover permit a limited opening of the cover. Indeed, in accordance with such junction box types, passing from the closed configuration of the box to the maximum opening configuration, the cover rotates for an overall angle of little more than 90°.

. Moreover, both the columns intended to house the particular spherical head screws and the seats for the optional hinges take up a lot of room within the box. Outside dimensions being equal, this means a net reduction of the usable room inside the box.

. In particular, in the solution which employs optional hinges, the seat inside the box takes up usable room, independently from the effective employment of the hinge.
US 5 186 661 A discloses a protector module including a housing having cavities into which are inserted electrical components such as surge protector elements.
FR-A-2 694 038 discloses an integrally-moulded double hinge capable of shifting sideways when opened through 180 DEG, each of its ends being engageable in a respective one of two members to be hinge-mounted.

. Object of the present invention is that of making available a connection device for junction boxes for electrical installations which permits overcoming, at least in part, the above drawbacks lamented with reference to the prior art.

. In particular, task of the present invention is that of making available a connection device for junction boxes which may be employed according to need.

. Another task of the present invention is that of making available a connection device for junction boxes which has limited size, particularly in the case in which the specific needs do not require the use of the connection device.

. A further task of the present invention is that of making available a connection device for junction boxes which permits opening the cover well over 90°.

. Such object and such tasks are achieved by means of a connection device for junction boxes in accordance with claim 1, by means of a kit in accordance with claim 16 and by means of an employment method of the kit in accordance with claim 21.

. Further characteristics and advantages of the connection device for junction boxes according to the invention will be clearer from the description reported below of preferred example embodiments, given as indicative and not limiting, with reference to the attached figures, in which:

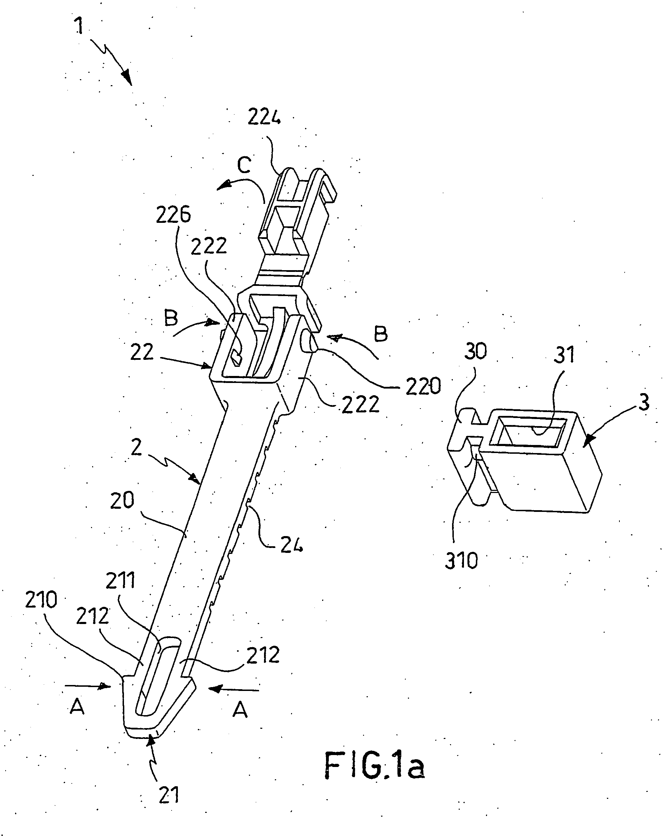

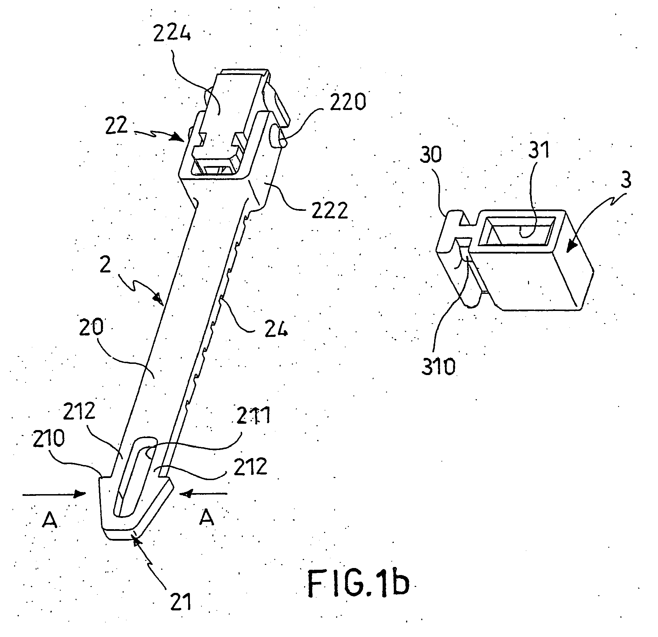

. Figure 1.a illustrates a perspective view of a connection device according to the invention in a supply configuration;

. Figure 1.b illustrates a perspective view of a connection device according to the invention in an intermediate mounting configuration;

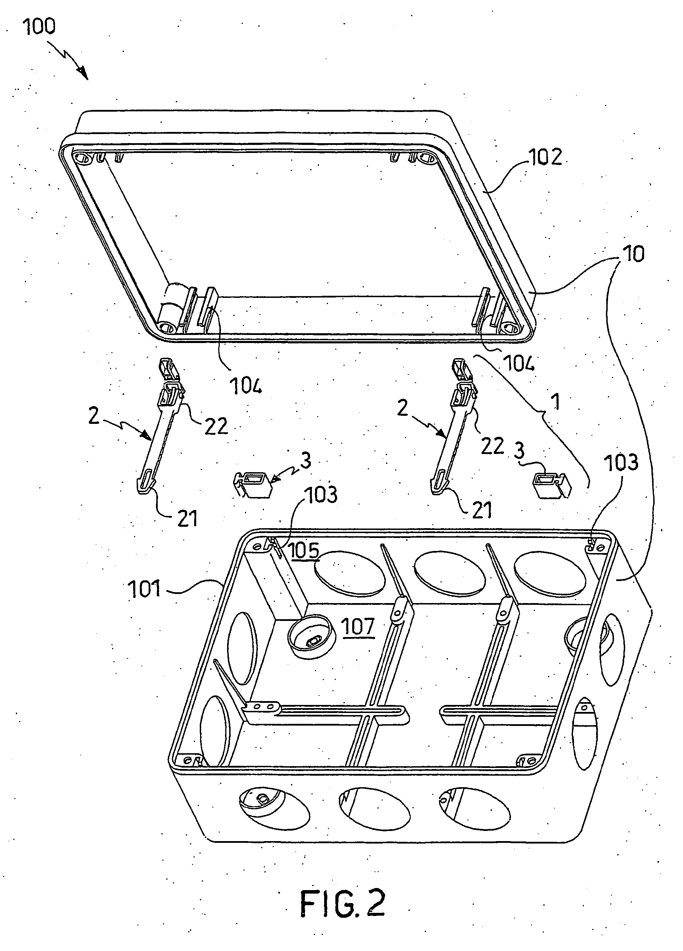

. Figure 2 illustrates a perspective view of a kit comprising the connection device according to the invention and a first junction box type, in a first mounting step;

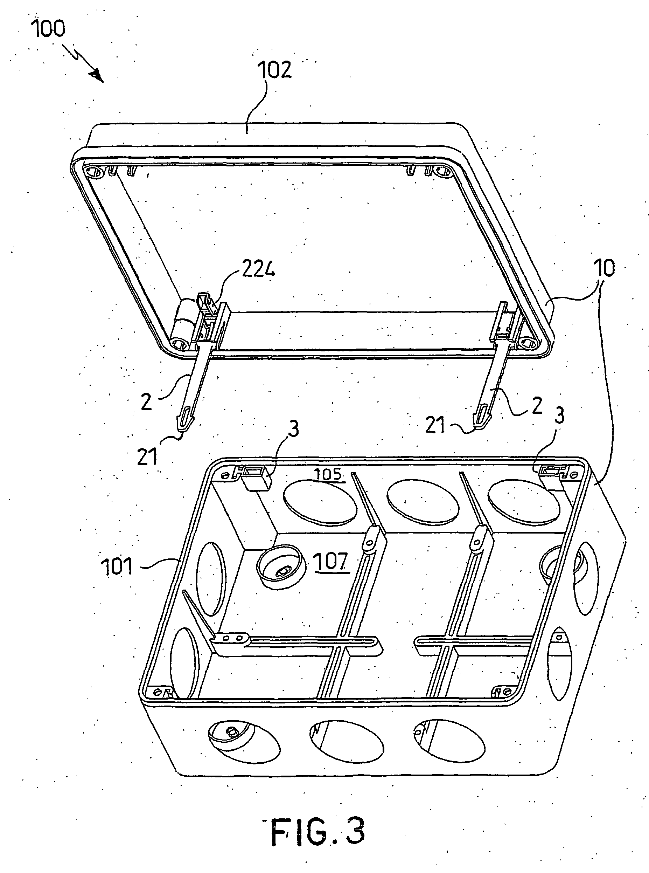

. Figure 3 illustrates the kit of figure 2 in a second mounting step;

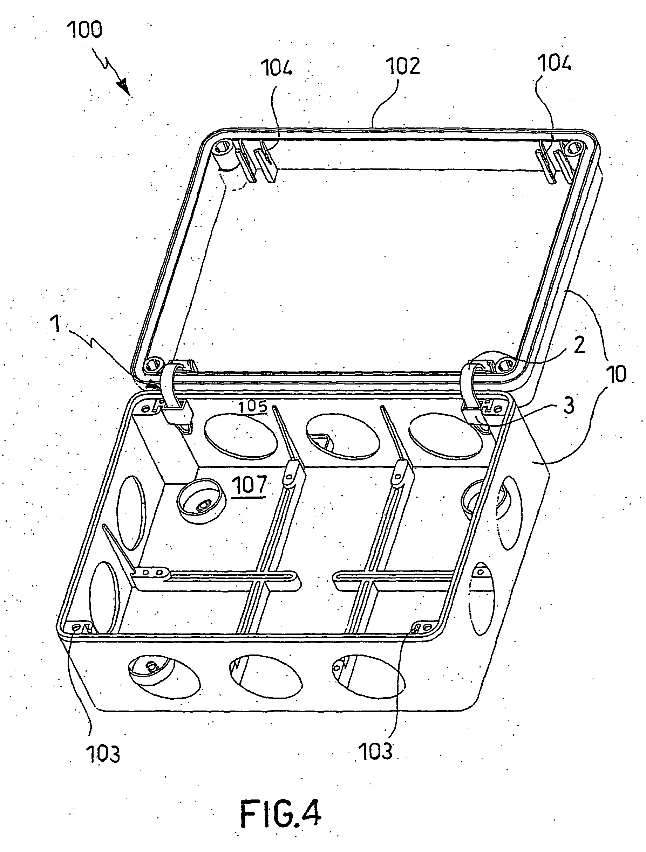

. Figure 4 illustrates the kit of figure 2 in a use configuration;

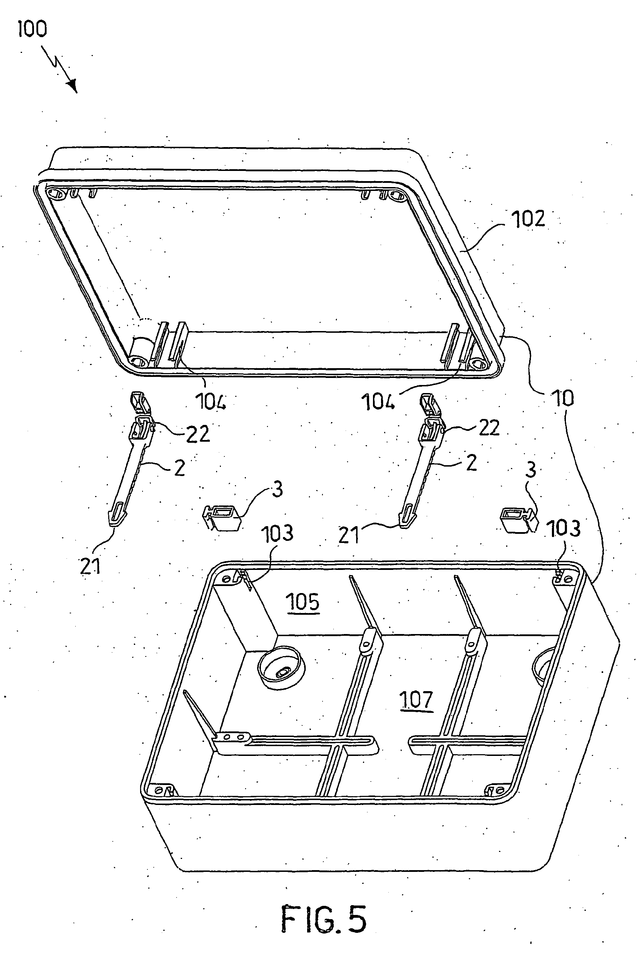

. Figure 5 illustrates a perspective view of a kit comprising the connection device according to the invention, in a first mounting step.

. With reference to the aforementioned figures, with 1 a connection device according to the invention is indicated in its entirety for a junction box 10.

. The junction box 10 comprises, in an in se known manner, a box 101 and a cover 102. The box 101 comprises side walls 105 and a bottom 107. Both the box 101 and the cover 102 comprise at least one seat, 103 and 104 respectively, whose function will be described further on.

. The connection device 1 according to the invention comprises hinge connection means 2. Such hinge connection means have a first end 21 and a second end 22, preferably connected to each other by a band 20. The first end 21 is adapted to be connected with the box 101 of the junction box 10.

. The second end 22 is instead adapted to be connected with the cover 102, compatible with the box 101 of the junction box 10.

. The connection device 1 according to the invention moreover comprises a guide element 3 adapted to be slidingly engaged with at least one of the ends 21 or 22 and with the band 20 of the hinge connection means 2.

. Moreover, the guide element 3 is provided with means adapted to be engaged, if necessary, with the junction box 10.

. In view of what is described above, it is therefore clear that the connection device 1 according to the invention is adapted to connect a box 101 and a cover 102 of a junction box 10. The connection device 1 comprises at least one sliding coupling between hinge connection means 2 and the guide element 3.

. In other words, the connection device 1 according to the invention permits the two anchorings, adapted to be respectively engaged with the cover 102 and with the box 103, to mutually rotate thanks to the presence of hinge connection means 2, and one may move with respect to the other, thanks to the sliding coupling described above.

. In accordance with the embodiment represented in the attached figures, the hinge connection means 2 and the guide element 3 are produced independently from each other and are provided in disassembled configuration.

. In accordance with the embodiment of figure 1.a, the first end 21 and the band 20 of the hinge connection means 2 are shaped so that they may be inserted within a slot 31 provided on the guide element 3.

. The first end 21 comprises snap lock 210 which, once it has passed beyond the end of the slot 31, prevents the first end 21 from accidentally slipping off the slot 31 itself. The possibility of forcing the snap lock 210 so as to slip off the first end 21 from the slot 31 if needed, is obviously up to the operator.

. The snap lock 210 takes advantage of the elasticity of the material with which the piece is manufactured. In order to better take advantage of the material elasticity, a hole 211 is provided in the band 20 at the snap lock 210. The presence of the hole 211 defines two blades 212 at the end 21 which confer elasticity to the snap lock 210. The movements permitted to the blades 212 are indicated by the arrows A in figures 1.a and 1.b.

. In accordance with the embodiment of figure 1.a, the second end 22 of the hinge connection means 2 is shaped so that it may be inserted within the appropriate seat 104 provided on the cover 102 of the junction box 10.

. In particular, the second end 22 comprises a snap lock 220 which, once inserted within the seat 104, prevents the second end 22 from accidentally slipping out from the seat 104 itself.

. The snap lock 220 takes advantage of the elasticity of the material with which the piece is manufactured. As seen in figure 1.a, two blades 222 are provided in the second end 22 which confer elasticity to the snap lock 220. The movements permitted to the blades 222 are indicated by the arrows B in figure 1.a.

. In order to better ensure the strength of the snap lock 220 once it is inserted in the seat 104, a spacer 224 is provided. As seen in figure 1.b, the spacer 224 is intended to be inserted between the two blades 222 of the snap lock 220, so as to prevent them from newly bending, uncoupling from the seat 104. The movement of the spacer 224 is indicated by the arrow C in figure 1.a.

. In turn, the spacer 224 is held in its operative position by a snap lock 226. The possibility of forcing the snap lock 226, thus removing the spacer 224 if necessary, is obviously up to the operator. This would permit the bending of the blades 222 and thus permit the second end 22 to slip out from the seat 104.

. The mounting means 30 of the guide element 3 are also provided with a snap lock 310. Once the mounting means 30 are inserted within the suitable seat 103 provided on the box 101, the snap lock 310 prevents the mounting means 30 of the guide element 3 from accidentally slipping out from the seat 103 itself. The possibility of forcing the snap lock 310, thus removing the guide element 3 from the seat 103 if necessary, is obviously up to the operator.

. In accordance with the embodiment represented in the attached figures, the connection means obtain the effect of the hinge by taking advantage of the elastic or elasto-plastic deformability of the material with which the band 20 is manufactured. Such solution offers the considerable advantage of being able to produce the hinge connection means 2 with a single mould.

. As an alternative to this solution, it is possible to substitute the flexible band 20 with a traditional hinge composed of plates rotatable around a common pivot.

. As unambiguously seen in figure 4, the solution described here permits an opening angle of the cover much greater than 90°, more precisely the opening angle is close to 180°.

. Such characteristic necessarily requires that an ideal hinge axis is arranged, at maximum opening, in proximity to the outer edge of the box 101. Such necessity and the need to maintain the hinges inside the box 10 when it is closed, lead to an increased complication of the constructive solutions which adopt the traditional hinge composed of plates rotatable around a common pivot. For example, the traditional hinge must comprise a plurality of plates, rotatable two-by-two around common pivots.

. In accordance with the embodiment represented in the attached figures, the band 20 comprises a plurality of abutments 24 arranged in the section in which it scrapes against the edge of the box 101 during the opening step of the cover 102. Such feature permits to obtain a snap opening of the cover 102.

. In other words, the entire opening angle is subdivided into discrete steps. The cover 102 reaches subsequent positions of stable equilibrium, spaced a few degrees from each other. In this manner it is possible to temporarily limit the opening angle, for example to 90°.

. A junction box 10 and at least one connection device 1 compose a kit 100 according to the invention. Below, reference is made to a kit comprising two connection devices 1, but in light of the description it will be clear now for the person skilled in the art that their number may vary from one to three and more, according to the specific needs.

. Several embodiments of the method of use of the kit 100 according to the invention are exemplified below.

. With reference to figure 2, the installer has available the junction box and two connection devices 1 in disassembled configuration.

. When the installer evaluates that it is preferable to use the connection devices 1, he proceeds to engage the guide element 3 with the box 101 or, alternatively, with the cover 102 of the junction box 10.

. Then the installer engages an end of the hinge connection means 2 with the element of the junction box 10, i.e. the cover 102 or alternatively the box 101, on which he has not engaged the guide element 3.

. Finally the installer slidingly engages the free end of the hinge connection means 2 with the guide element 3.

. In accordance with another embodiment of the method, if it is preferable to use the connection devices 1, the installer proceeds to insert in the respective seat 104 the second end 22 of each hinge connection means 2. The snap locks 220 become operative by locking the second end 22 in the respective seat 104. Following this operation, the intermediate mounting configuration is reached of the hinge connection means 2 situated on the left in figure 3.

. Subsequently, the installer bends the spacer 224 in the C direction of figure 1.a, inserting it between the blades 222. The snap locks 226 become operative by locking the spacer 224 between the blades 222. Following this operation, the intermediate configuration is reached of the hinge connection means 2 situated on the right in figure 3.

. Afterward, the installer proceeds to insert the mounting means 30 of each of the guide elements 3 in the respective seat 103. The snap locks 310 become operative by locking the mounting means 30 in the respective seat 103. Following this operation, the intermediate configuration is reached of the guide elements of figure 3.

. It is evident from what is described above that the mounting sequence may be inverted without departing from the scope of the invention. It is therefore possible to insert first each guide element 3 in the respective seat 103 and subsequently each second end 22 in the respective seat 104.

. Finally, the installer proceeds to insert in the slot 31 the first end 21 of each hinge connection means 2. The snap locks 210 become operative constraining the first end 21 and the band 20 to slide along the slot 31. Following this operation, the use configuration is reached of the connection devices 1 of figure 4.

. As the person skilled in the art may easily understand from what is described above, the methods of use of the kit 100 may be completed independently from the fact that the box 101 is already installed or has yet to be installed. The possibility of opening the cover 102 up to 180° indeed permits an easy access for the mounting tools of the box 101 itself. On the contrary, in the boxes of the prior art with opening limited to approximately 90°, the access of the mounting tools is difficult in the presence of the cover 102, even at its maximum opening. For such reason, the boxes of the prior art force the installation of the only box first, and only subsequently permit the mounting of the hinges and cover.

. If instead the installer decides that it is preferable not to use the connection devices 1, he simply proceeds with the installation of the box 101 and related installation portion. Subsequently, the installer will proceed with the fixing of the cover 102, eliminating the connection devices 1.

. As may be easily understood prom what is written above, the guide element 3 may be easily applied to the box if necessary, or may be eliminated if considered to be superfluous. In this second case, unlike what occurs with the prior art kits, the inner space of the box 101 is not uselessly taken up by an unused seat.

. Even in the case in which the guide element 3 is engaged, as may be noted above all in figures 3 and 4, the space it takes up inside the box 101 is extremely reduced with respect to the extension of the wall 105 on which it lies.

. In particular, the guide element 3 remains situated in the part of the box 101 near the cover 102. On the contrary, the guide element 3 leaves completely free the bottom 107 of the box 101 opposite to the cover 102, and the portion of the wall 105 near the bottom 107.

. The wall portion 105 which extends between the guide element 3 and the bottom 107 of the box 101, even if free from fixed obstructions, receives the movement of the band 20 and first end 21. It should therefore be noted that due to the flexibility of the band 20, such movement does not totally prevent the use of such wall portion 105.

. In particular, above all in the case of a continuous wall box as that of figure 5, the installer may deem it appropriate to place a cable gland or small instrument system between the guide element 3 and the bottom 107. In such case, during the closing of the cover 102, the band 20 sliding towards the bottom 107 would conform itself to the bulk of the encountered components and would take up the adjacent free spaces.

. From what is described above, it is intended how the connection device and the use of the kit according to the invention are easy, quick and may be manually executed. In other words, the use of the kit according to the invention does not require the employment of any tool.

. The above description and attached drawings refer to an embodiment of the kit 100 in which an end of the connection device 1 is connected in a fixed manner to the cover 102 and the other end is connected is sliding manner to the box 101.

. It is evident, in light of the description, that it is also possible to provide a kit 100 according to the invention in which an end of the connection device 1 is connected in sliding manner to the cover 102 and the other end is connected in fixed manner to the box 101. Analogously, it is possible to provide a kit 100 according to the invention in which both ends of the connection device 1 are connected in sliding manner to the box 10.

. To the embodiments of the above described connection device 1 and kit 100, a person skilled in the art, in order to satisfy contingent needs, may bring modifications, adaptations and substitutions of elements with others functionally equivalent, without departing from the scope of the following claims. Each of the characteristics described as belonging to a possible embodiment may be provided independently from other described embodiments.

## Claims

1. Connection device (1) of a box (101) and cover (102) of a junction box (10), comprising:
- hinge connection means (2) having a first end (21) and a second end (22) of coupling to the box (101) and cover (102), respectively,
- a guide element (3) adapted to be slidingly engaged with an end (21) of said hinge connection means (2) and with said box (10),
**characterised in that** the guide element (3) is provided with mounting means (30) adapted to be engaged with said box (10), if needed.

2. Connection device (1) according to claim 1 in which said first and second end (21, 22) of said hinge connection means (2) are connected with each other by a band (20).

3. Connection device (1) according to any of the preceding claims, in which said hinge connection means (2) and said guide element (3) are manufactured independently from each other and are provided in disassembled configuration.

4. Connection device (1) according to any one of the preceding claims in which said guide element (3) comprises a slot (31) adapted to receive said first end (21) of said hinge connection means (2).

5. Connection device (1) according to any one of the preceding claims, in which said second end (22) of said hinge connection means (2) is shaped such to be suitable to be inserted within a suitable seat (104) provided on the cover (102) of said junction box (10).

6. Connection device (1) according to the preceding claim, in which said second end (22) comprises a spacer (224) intended to prevent said second snap lock (220) from unhooking from the seat (104).

7. Connection device (1) according to any one of the preceding claims, in which said mounting means (30) of said guide element (3) are shaped such that they may be inserted within a suitable seat (103), provided on the box (101) of said junction box (10).

8. Connection device (1) according to any one of the preceding claims in which said hinge connection means (2) obtain the hinge effect by taking advantage of the elastic or elasto-plastic deformability of the material with which they are manufactured.

9. Connection device (1) according to any one of the preceding claims in which said hinge connection means (2) obtain the hinge effect by taking advantage of plates rotatable around a common pivot.

10. Connection devices (1) according to any one of the preceding claims in which said hinge connection means (2) comprise a plurality of abutments (24) arranged such that they permit a subsequent snap opening of the cover (102).

11. Kit (100) comprising a junction box (10) and at least one connection device (1) according to any one of the preceding claims.

12. Kit (100) according to the preceding claim in which said junction box (10) comprises a box (101) and a cover (102), said box comprising a seat (103) adapted to receive said mounting means (30) of said guide element (3) and said cover comprising a seat (104) adapted to receive said second end (22) of said hinge connection means (2).

13. Kit (100) according to claim 11 or 12 in which, when said at least one connection device (1) is in its use configuration, the maximum opening angle of said cover (102) with respect to said box (101) is greater than 90°, preferably it is close to 180°.

14. Kit (100) according to any one of the claims from 11 to 13 in which said cover (102), passing through the whole opening angle, reaches subsequent positions of stable equilibrium.

15. Method of employment of a kit (100) according to claim 11 when it depends on claim 1, comprising the steps of:
- providing a junction box (10) comprising a box (101) and a cover (102);
- providing a connection device (1) comprising
- hinge connection means (2) having a first end (21) and a second end (22) of coupling to the box (101) and cover (102), respectively,
- a guide element (3) adapted to be slidingly engaged with an end (21) of said hinge connection means (2) and with said box (10),
whereby the guide element (3) is provided with mounting means (30) adapted to be engaged with said box (10), if needed.
- engaging said guide element (3) with said box (101) or, alternatively, with said cover (102) of said junction box (10) ;
- engaging one end of said hinge connection means (2) with said cover (102) or with said box (101), on which said guide element is not engaged (3);
- slidingly engaging the free end of said hinge connection means (2) with said guide element (3).

## Patentansprüche

1. Verbindungseinrichtung (1) für einen Kasten (101) und eine Abdeckung (102) eines Anschlusskasten (10), aufweisend:
- ein Gelenkverbindungsmittel (2) mit einem ersten Ende (21) und einem zweiten Ende (22) zum Ankoppeln an den Kasten (101) bzw. die Abdeckung (102),
- ein Führungselement (3), das dazu geeignet ist, mit einem Ende (21) des Gelenkverbindungsmittels (2) und mit dem Kasten (10) gleitend in Eingriff gebracht zu werden,
**dadurch gekennzeichnet, dass** das Führungselement (3) ein Verbindungsmittel (30) aufweist, das geeignet ist, bei Bedarf mit dem Kasten (10) in Eingriff gebracht zu werden.

2. Verbindungseinrichtung (1) nach Anspruch 1, wobei das erste und zweite Ende (21, 22) des Gelenkverbindungsmittels (2) miteinander durch ein Band (20) verbunden sind.

3. Verbindungseinrichtung (1) nach einem der vorhergehenden Ansprüche, wobei das Gelenkverbindungsmittel (2) und das Führungselement (3) unabhängig voneinander hergestellt und in auseinandergebauter Form bereitgestellt werden.

4. Verbindungseinrichtung (1) nach einem der vorhergehenden Ansprüche, wobei das Führungselement (3) einen Schlitz (31) aufweist, der geeignet ist, das erste Ende (21) des Gelenkverbindungsmittels (2) aufzunehmen.

5. Verbindungseinrichtung (1) nach einem der vorhergehenden Ansprüche, wobei das zweite Ende (22) des Gelenkverbindungsmittels (2) derart geformt ist, dass es geeignet ist, in einen an dem Deckel (102) des Anschlusskastens (10) vorgesehenen, geeigneten Sitz (104) eingesetzt zu werden.

6. Verbindungseinrichtung (1) nach einem der vorhergehenden Ansprüche, wobei das zweite Ende (22) einen Abstandshalter (224) aufweist, der dafür vorgesehen ist, ein Ausrasten des zweiten Schnappverschlusses (220) aus dem Sitz (104) zu verhindern.

7. Verbindungseinrichtung (1) nach einem der vorhergehenden Ansprüche, wobei die Verbindungsmittel (30) des Führungselements (3) derart ausgebildet sind, dass sie in einen geeigneten Sitz (103) eingesetzt werden können, der an dem Kasten (101) des Anschlusskastens (10) vorgesehen ist.

8. Verbindungseinrichtung (1) nach einem der vorhergehenden Ansprüche, wobei das Gelenkverbindungsmittel (2) die Gelenkwirkung durch Nutzung der elastischen oder elasto-plastischen Verformbarkeit des Materials, aus dem es gefertigt ist, erzielt.

9. Verbindungseinrichtung (1) nach einem der vorhergehenden Ansprüche, wobei das Gelenkverbindungsmittel (2) die Gelenkwirkung durch Nutzung von um gemeinsame Drehachsen rotierbaren Platten erzielt.

10. Verbindungseinrichtung (1) nach einem der vorhergehenden Ansprüche, wobei das Gelenkverbindungsmittel (2) eine Vielzahl von Widerlagern (24) aufweist, die derart angeordnet sind, dass sie ein nachfolgendes Schnappöffnen der Abdeckung (102) erlauben.

11. Bausatz (100) aufweisend einen Anschlusskasten (10) und zumindest eine Verbindungseinrichtung (1) nach einem der vorhergehenden Ansprüche.

12. Bausatz (100) nach einem der vorhergehenden Ansprüche, wobei der Anschlusskasten (10) einen Kasten (101) und eine Abdeckung (102) aufweist, wobei der Kasten einen Sitz (103) aufweist, der geeignet ist, das Verbindungsmittel (30) des Führungselements (3) aufzunehmen, und wobei die Abdeckung einen Sitz (104) aufweist, der geeignet ist, das zweite Ende (22) des Gelenkverbindungsmittels (2) aufzunehmen.

13. Bausatz (100) nach Anspruch 11 oder 12, wobei, wenn zumindest eine Verbindungseinrichtung (1) in ihrer Verwendungsanordnung ist, der maximale Öffnungswinkel der Abdeckung (102) hinsichtlich des Kastens (101) größer als 90° ist, vorzugsweise ist er nahe 180°.

14. Bausatz (100) nach einem der Ansprüche 11 bis 13, wobei die Abdeckung (102) beim Durchschwenken des gesamten Öffnungswinkelbereichs aufeinanderfolgende Positionen stabilen Gleichgewichts erreicht.

15. Verfahren zur Verwendung eines Bausatzes (100) nach Anspruch 11, wenn dieser von Anspruch 1 abhängig ist, aufweisend die Schritte:
- Bereitstellen eines Anschlusskastens (10) aufweisend einen Kasten (101) und eine Abdeckung (102);
- Bereitstellen einer Verbindungseinrichtung (1) aufweisend:
- ein Gelenkverbindungsmittel (2) mit einem ersten Ende (21) und einem zweiten Ende (22) zum Verbinden mit dem Kasten (101) bzw. der Abdeckung (102),
- ein Führungselement (3), das geeignet ist, mit einem Ende (21) des Gelenkverbindungsmittels (2) und mit dem Kasten (10) gleitend in Eingriff gebracht zu werden, wobei das Führungselement (3) ein Verbindungsmittel (30) aufweist, das geeignet ist, bei Bedarf mit dem Kasten (10) in Eingriff gebracht zu werden,
- in Eingriff bringen des Führungselements (3) mit dem Kasten (101) oder alternativ mit der Abdeckung (102) des Anschlusskastens (10);
- in Eingriff bringen eines Endes des Gelenkverbindungsmittels (2) mit der Abdeckung (102) oder dem Kasten (101), je nachdem mit welchem das Führungselement (3) nicht in Eingriff steht;
- gleitendes in Eingriff bringen des freien Endes des Gelenkverbindungsmittels (2) mit dem Führungselement (3).

## Revendications

1. Dispositif de connexion (1) d'une boîte (101) et d'un couvercle (102) d'une boîte de jonction (10), comprenant :
- des moyens de connexion à charnière (2) ayant une première extrémité (21) et une deuxième extrémité (22) pour le raccordement à la boîte (101) et au couvercle (102), respectivement,
- un élément de guidage (3) adapté pour être engagé en coulissement avec une extrémité (21) desdits moyens de connexion à charnière (2) et avec ladite boîte (10),
**caractérisé en ce que** l'élément de guidage (3) est doté d'organes de montage (30) adaptés pour être engagés avec ladite boîte (10), en cas de besoin.

2. Dispositif de connexion (1) selon la revendication 1 dans lequel lesdites première et deuxième extrémités (21, 22) desdits moyens de connexion à charnière (2) sont connectées l'une à l'autre par une bande (20).

3. Dispositif de connexion (1) selon l'une des revendications précédentes, dans lequel lesdits moyens de connexion à charnière (2) et ledit élément de guidage (3) sont fabriqués indépendamment l'un de l'autre et sont fournis selon une configuration désassemblée.

4. Dispositif de connexion (1) selon l'une quelconque des revendications précédentes dans lequel ledit élément de guidage (3) comprend une encoche (31) adaptée pour recevoir ladite première extrémité (21) desdits moyens de connexion à charnière (2).

5. Dispositif de connexion (1) selon l'une quelconque des revendications précédentes, dans lequel ladite deuxième extrémité (22) desdits moyens de connexion à charnière (2) est conformée de manière à être adaptée à l'insertion dans une assise appropriée (104) prévue sur le couvercle (102) de ladite boîte de jonction (10).

6. Dispositif de connexion (1) selon la revendication précédente, dans lequel ladite deuxième extrémité (22) comprend une entretoise (224) destinée à empêcher que ledit deuxième verrou d'emboîtement (220) ne se décroche de l'assise (104).

7. Dispositif de connexion (1) selon l'une quelconque des revendications précédentes, dans lequel lesdits organes de montage (30) dudit élément de guidage (3) sont conformés de manière à pouvoir être insérés dans une assise appropriée (103), prévue sur la boîte (101) de ladite boîte de jonction (10).

8. Dispositif de connexion (1) selon l'une quelconque des revendications précédentes dans lequel lesdits moyens de connexion à charnière (2) aboutissent à l'effet de charnière grâce à la déformabilité élastique ou élastico-plastique du matériau avec lequel ils sont fabriqués.

9. Dispositif de connexion (1) selon l'une quelconque des revendications précédentes dans lequel lesdits moyens de connexion à charnière (2) aboutissent à l'effet de charnière grâce à des plaques pouvant tourner autour d'un pivot commun

10. Dispositif de connexion (1) selon l'une quelconque des revendications précédentes dans lequel lesdits moyens de connexion à charnière (2) comprennent une pluralité de butées (24) agencées de manière à permettre une ouverture subséquente par pression du couvercle (102).

11. Equipement (100) comprenant une boîte de jonction (10) et au moins un dispositif de connexion (1) selon l'une quelconque des revendications précédentes.

12. Equipement (100) selon la revendication précédente dans lequel ladite boîte de jonction (10) comprend une boîte (101) et un couvercle (102), ladite boîte comprenant une assise (103) adaptée pour recevoir lesdits organes de montage (30) dudit élément de guidage (3) et ledit couvercle comprenant une assise (104) adaptée pour recevoir ladite deuxième extrémité (22) desdits moyens de connexion à charnière (2).

13. Equipement (100) selon la revendication 11 ou 12 dans lequel, lorsque ledit au moins un dispositif de connexion (1) se trouve dans sa configuration d'utilisation, l'angle maximal d'ouverture dudit couvercle (102) par rapport à ladite boîte (101) est supérieur à 90°, de préférence proche de 180°.

14. Equipement (100) selon l'une quelconque des revendications allant de 11 à 13 dans lequel ledit couvercle (102), se déployant tout au long de l'angle d'ouverture, atteint des positions subséquentes d'un équilibre stable.

15. Procédé d'utilisation d'un équipement (100) selon la revendication 11 lorsqu'elle dépend de la revendication 1, comprenant les étapes qui consistent à :
- fournir une boîte de jonction (10) comprenant une boîte (101) et un couvercle (102);
- fournir un dispositif de connexion (1) comprenant
- des moyens de connexion à charnière (2) ayant une première extrémité (21) et une deuxième extrémité (22) pour le raccordement à la boîte (101) et au couvercle (102), respectivement,
- un élément de guidage (3) adapté pour être engagé en coulissement avec une extrémité (21) desdits moyens de connexion à charnière (2) et avec ladite boîte (10),
moyen par lequel l'élément de guidage (3) est doté d'organes de montage (30) adaptés pour être engagés avec ladite boîte (10), en cas de besoin.
- engager ledit élément de guidage (3) avec ladite boîte (101) ou, alternativement, avec ledit couvercle (102) de ladite boîte de jonction (10);
- engager une extrémité desdits moyens de connexion à charnière (2) avec ledit couvercle (102) ou avec ladite boîte (101), sur laquelle ledit élément de guidage n'est pas engagé (3);
- engager en coulissement l'extrémité libre desdits moyens de connexion à charnière (2) avec ledit élément de guidage (3).
